# FASCICULE DE BREVET EUROPEEN

(11) **EP 2 951 558 B1**
(45) Date de publication et mention de la délivrance du brevet: **04.09.2019**
(21) Numéro de dépôt: 14702013.5
(22) Date de dépôt: 30.01.2014
(51) Int. Cl.: G01N 21/01, G01N 21/13, G01N 21/65, G03H 1/04

(54) **PROCEDE DE REGLAGE DE LA POSITION RELATIVE D'UN ANALYTE PAR RAPPORT A UN FAISCEAU LUMINEUX**
VERFAHREN ZUR REGELUNG DER RELATIVEN POSITION EINES ANALYTEN IN BEZUG AUF EINEN LICHTSTRAHL
METHOD FOR REGULATING THE RELATIVE POSITION OF AN ANALYTE IN RELATION TO A LIGHT BEAM

(30) Priorité: 31.01.2013 FR 1350857
(43) Date de publication de la demande: 09.12.2015
(73) Titulaire: Commissariat à l'Energie Atomique et aux Energies Alternatives, 75015 Paris (FR)
(72) Inventeur: STROLA, Samy, F-38000 Grenoble (FR); ALLIER, Cédric, F-38000 Grenoble (FR); DUPOY, Mathieu, F-38100 Grenoble (FR); SCHULTZ, Emmanuelle, F-38120 Saint Egreve (FR)
(74) Mandataire: Lavoix
(86) Numéro de dépôt international: PCT/EP2014/051775
(87) Numéro de publication internationale: WO 2014/118263

(56) Documents cités:
- A Greenbaum and A Ozcan: "Maskless imaging of dense samples using pixel super-resolution based multi-height lensfree onchip microscopy", Optics Express, vol. 20, no. 3 30 janvier 2012 (2012-01-30), pages 3129-3143, XP055066626, Extrait de l'Internet: URL:http://www.opticsinfobase.org/DirectPD FAccess/680A1733-AB3A-8B47-2184FA4DAD6810E C_226807/oe-20-3-3129.pdf?da=1&id=226807&s eq=0&mobile=no [extrait le 2013-06-13]
- Anonymous: "Microtechnologies for Biology and Healthcare", LETI ANNUAL RESEARCH REPORT 2012 , 2012, pages 1-69, XP002698908, Extrait de l'Internet: URL:http://www-leti.cea.fr/en/Discover-Let i/documents3 [extrait le 2013-06-18]
- C P Allier et AL: "Bacteria detection with thin wetting film lensless imaging", Biomed. Opt. Express, vol. 1, no. 3 1 octobre 2010 (2010-10-01), pages 762-770, XP055066537, Extrait de l'Internet: URL:http://www.opticsinfobase.org/DirectPD FAccess/5DB6B7F5-D7B6-6C9A-B226E05846421E7 7_205470/boe-1-3-762.pdf?da=1&id=205470&se q=0&mobile=no [extrait le 2013-06-13]
- Buzalewicz I. ET AL: "Influence of various growth conditions on Fresnel diffraction patterns of bacteria colonies examined in the optical system with converging spherical wave illumination", Optics Express, vol. 19, no. 22, 24 October 2012 (2012-10-24), pages 21768-21785, XP055309844,

## Description

La présente invention concerne un procédé de réglage de la position relative d'un analyte d'un échantillon par rapport à un faisceau lumineux. La présente invention se rapporte également à un procédé d'analyse d'un analyte d'un échantillon à l'aide d'un faisceau lumineux. La présente invention concerne également le porte-échantillon et le système optique associés.

Dans le domaine de l'analyse spectrométrique, un dispositif d'analyse comprenant une sonde optique est utilisé. La sonde optique permet d'exciter un analyte, ce qui permet de récolter un signal issu de l'analyte en réponse à l'excitation de la sonde. La qualité du signal et donc de l'analyse implique un alignement de la sonde optique sur l'analyte avec la plus grande précision possible. Ceci est délicat lorsque les dimensions de l'analyte sont faibles, par exemple de l'ordre du micromètre.

Pour réaliser l'alignement, il est connu du document US-A-2012/0040330 un système comportant un dispositif d'analyse avec une sonde optique combiné à une architecture de microscope. Le système est adapté à fonctionner dans une modalité d'imagerie dans laquelle l'analyte est éclairé par un faisceau de lumière blanche et dans une modalité d'analyse dans laquelle l'analyte est éclairé par la sonde optique. L'alignement sur l'analyte se fait avec le faisceau de lumière blanche et en utilisant des objectifs de l'architecture de microscope de grossissement croissant.

Mais, ce système impose un temps d'alignement relativement long. En outre l'alignement n'est garanti que si la position du faisceau issu de la sonde optique est identique à la fois dans la modalité d'imagerie et dans la modalité d'analyse. Cela requiert une vérification régulière de la position du faisceau issu de la sonde optique pour prévenir un défaut d'alignement.

Il est connu des systèmes d'imagerie des documents suivants:
- article intitulé «Influence of Various growth conditions on Fresnel diffraction patterns of bacteria colonies examined in the optical system with converging spherical wave illumination», Optics Express, vol. 19. numéro 22, 24 octobre 2012, et
- article intitulé «Bacteria détection with thin wetting film lensless imaging», Biomed. Opt. Express, vol. 1. no 3, 1er octobre 2010.

Il existe donc un besoin pour un procédé de réglage de la position relative d'un analyte par rapport à un faisceau lumineux qui soit plus rapide.

Selon l'invention, ce but est atteint par un procédé de réglage de la position relative d'un analyte d'un échantillon par rapport à un faisceau lumineux. Le procédé comprend l'illumination de l'analyte de l'échantillon par le faisceau lumineux, la prise par un dispositif d'imagerie d'une image en transmission des faisceaux diffusés par l'analyte de l'échantillon pour établir une figure de diffraction, et la modification de la position relative de l'analyte de l'échantillon par rapport au faisceau lumineux en fonction d'au moins une propriété de la figure de diffraction.

Suivant des modes de réalisation particulier, le procédé de réglage comprend une ou plusieurs des caractéristiques suivantes, prise(s) isolément ou suivant toute combinaison techniquement possible :
- le faisceau lumineux est issu d'une source lumineuse et se propage selon un axe de propagation.
- la modification de la position de l'analyte de l'échantillon par rapport au faisceau lumineux comprend au moins une des étapes suivantes :
- l'alignement de l'analyte de l'échantillon sur l'axe de propagation du faisceau lumineux,
- la modification de la distance entre la source lumineuse et l'analyte de l'échantillon selon l'axe de propagation pour que le motif de diffraction résultant des faisceaux diffusés par l'analyte de l'échantillon soit au centre de la figure de diffraction,
- l'ajustement de la distance entre la source lumineuse et l'analyte de l'échantillon selon l'axe de propagation jusqu'à ce que l'analyte de l'échantillon occulte le faisceau lumineux, et
- la modification de la position relative de l'analyte de l'échantillon par rapport au faisceau pour maximiser le rayonnement émis par l'analyte de l'échantillon en réponse à l'excitation du faisceau lumineux.
- chaque étape est mise en oeuvre en fonction d'une propriété de la figure de diffraction, la propriété étant différente pour chacune des étapes.
- la prise par un dispositif d'imagerie d'une image en transmission des faisceaux diffusés par l'analyte de l'échantillon pour établir une figure de diffraction et la modification de la position relative de l'analyte de l'échantillon par rapport au faisceau lumineux en fonction d'au moins une propriété de la figure de diffraction sont mises en oeuvre plusieurs fois.
- la propriété est la morphologie de la figure de diffraction ou la position de la figure de diffraction par rapport à la tâche formée par le faisceau lumineux dans l'image en transmission.
- le procédé comprend, en outre l'acquisition d'un signal d'analyse résultant du rayonnement émis par l'analyte de l'échantillon en réponse à l'illumination par le faisceau lumineux par un dispositif d'analyse, et la modification de la position relative de l'analyte de l'échantillon par rapport au faisceau pour optimiser au moins une caractéristique du signal d'analyse acquis.
- le dispositif d'imagerie est un dispositif d'imagerie sans lentilles.

L'invention se rapporte également à un procédé d'analyse d'un analyte d'un échantillon à l'aide d'un faisceau lumineux. Le procédé comprend le réglage de la position relative de l'analyte de l'échantillon par rapport au faisceau lumineux par mise en oeuvre d'un procédé de réglage tel que précédemment décrit et l'analyse par un dispositif d'analyse du rayonnement émis par l'analyte de l'échantillon en réponse à l'illumination par le faisceau lumineux.

Suivant des modes de réalisation particulier, le procédé de réglage comprend une ou plusieurs des caractéristiques suivantes, prise(s) isolément ou suivant toute combinaison techniquement possible :
- le procédé comprend successivement l'atténuation du faisceau lumineux par un moyen d'atténuation, le réglage de la position relative de l'analyte de l'échantillon par rapport au faisceau lumineux, l'arrêt de l'atténuation du faisceau lumineux et l'analyse par le dispositif d'analyse.
- le procédé comprend, en outre la détermination de caractéristiques de l'analyte de l'échantillon à partir de la figure de diffraction établie par le dispositif d'imagerie.

L'invention concerne aussi un porte-échantillon propre à porter un échantillon comprenant au moins un analyte. Le porte-échantillon comprend un dispositif d'imagerie propre à prendre une image en transmission des faisceaux diffusés par un analyte de l'échantillon pour établir une figure de diffraction, et une unité de réglage de la position relative de l'analyte d'un échantillon par rapport à un faisceau lumineux propre à modifier la position relative de l'analyte de l'échantillon en fonction d'au moins une propriété de la figure de diffraction.

Suivant un mode de réalisation particulier, le dispositif d'imagerie est un dispositif d'imagerie sans lentilles.

L'invention concerne aussi un système optique comportant une source lumineuse propre à illuminer un analyte de l'échantillon par un faisceau lumineux, et le porte-échantillon tel que précédemment décrit.

Suivant des modes de réalisation particuliers, le système optique comprend une ou plusieurs des caractéristiques suivantes, prise(s) isolément ou suivant toute combinaison techniquement possible :
- l'unité de réglage comprend un moyen de translation de la source lumineuse selon la direction de propagation du faisceau lumineux et un moyen de déplacement du porte-échantillon dans le plan perpendiculaire à la direction de propagation du faisceau lumineux.
- un ensemble comportant la source lumineuse et un dispositif d'analyse, le moyen de translation de la source lumineuse étant propre à déplacer l'ensemble selon la direction de propagation du faisceau lumineux.

D'autres caractéristiques et avantages de l'invention apparaîtront à la lecture de la description qui suit de modes de réalisation de l'invention, donnés à titre d'exemple uniquement et en référence aux dessins qui sont :
- figure 1, un schéma d'un exemple de système optique selon un premier mode de réalisation de l'invention ;
- figures 2A à 2E, les figures de diffraction observées lors d'un premier exemple de mise en oeuvre d'une étape d'un procédé d'alignement selon l'invention ;
- figures 3A à 3F, les figures de diffraction observées lors d'un deuxième exemple de mise en oeuvre d'une étape d'un procédé d'alignement selon l'invention ;
- figures 4A à 4C, les figures de diffraction observées lors d'un troisième exemple de mise en oeuvre d'une étape d'un procédé d'alignement selon l'invention ;
- figures 5 à 21, les figures de diffraction observées lorsqu'un procédé d'alignement selon l'invention est mis en oeuvre ;
- figure 22, un graphique montrant les spectres Raman enregistrés correspondant aux figures 5 à 21 ;
- figure 23, un tableau associant une pluralité de figures de diffraction respectivement à l'espèce d'un analyte observé et à une position de prise d'image dans le procédé selon l'invention ;
- figure 24, une vue schématique d'un exemple de système optique selon un deuxième mode de réalisation de l'invention.

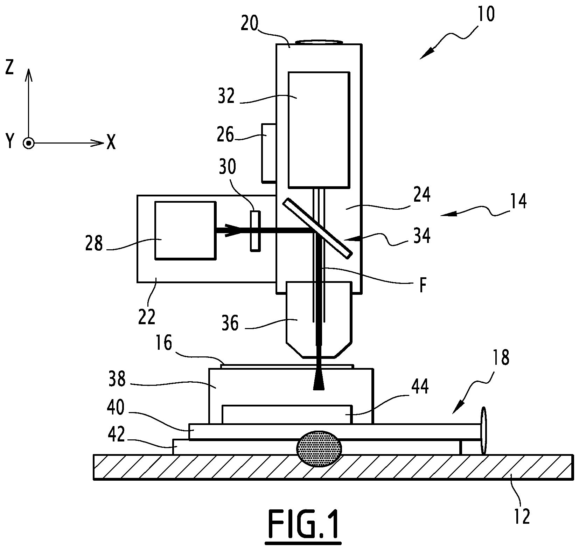

Le système optique 10 illustré à la figure 1 repose sur une table optique 12. La table optique 12 est propre à assurer au système optique une bonne stabilité.

Le système optique 10 comporte un ensemble 14, un échantillon 16 et un porte-échantillon 18.

L'ensemble 14 comporte un corps 20 ayant la forme générale d'un T, définissant ainsi une première branche 22 et une deuxième branche 24. La première branche 22 s'étend suivant une direction parallèle à l'axe X. L'axe X appartient au plan de la figure 1 et est parallèle au plan de l'échantillon 16. La deuxième branche 24 s'étend suivant une direction parallèle à l'axe Z. L'axe Z est un axe perpendiculaire à l'échantillon 16.

La direction parallèle à l'axe X est la direction latérale dans la suite de la description tandis que la direction parallèle à l'axe Z est la direction verticale. L'axe complémentaire orthogonal aux deux axes X et Z est noté Y. La direction parallèle à l'axe Y est appelée direction transversale.

L'ensemble 14 est muni d'un moyen de translation verticale 26.

Le moyen de translation verticale 26 est propre à déplacer l'ensemble du corps 20 selon la direction verticale. Le moyen de translation verticale 26 permet de modifier la distance entre le corps 20 et l'échantillon 16.

Selon l'exemple de la figure 1, le moyen de translation verticale est une platine motorisée.

La première branche 22 de l'ensemble 14 comporte une source lumineuse 28 et un moyen 30 d'atténuation de la source lumineuse 28 sous la forme d'une densité optique variable 30.

La source lumineuse 28 est propre à émettre un faisceau de lumière.

La source lumineuse 28 est, selon l'exemple de la figure 1, une source laser.

Par exemple, la source lumineuse 28 est un laser ou une diode électroluminescente. Une diode électroluminescente est également appelée sous l'acronyme anglais LED pour Light Emitting Diode.

Ainsi, d'une façon générale, le moyen 30 d'atténuation de la source lumineuse est disposé pour réduire l'intensité du faisceau incident sur l'échantillon lorsqu'il est procédé au positionnement de l'analyte par rapport au faisceau lumineux. Ce moyen 30 d'atténuation est désactivé lorsqu'il est procédé à l'analyse de l'analyte au moyen du dispositif d'analyse 32. Le moyen 30 d'atténuation est par exemple une densité optique amovible.

La densité optique variable 30 permet de contrôler l'intensité du faisceau laser issu de la source lumineuse 28 en sortie de la densité optique.

La densité optique 30 est amovible entre une position de retrait et une position déployée. Lorsque la densité optique 30 est dans la position de retrait, la densité optique 30 n'atténue pas le faisceau émis par la source lumineuse 28 tandis que lorsque la densité optique 30 est dans la position, la densité optique 30 atténue ce faisceau.

La deuxième branche 24 comporte un dispositif d'analyse 32, une lame séparatrice 34 et une optique 36.

Le dispositif d'analyse 32 est, par exemple, propre à effectuer une analyse de type spectroscopie Raman.

Lorsque la densité optique 30 est dans la position de retrait, le dispositif d'analyse 32 comprend une sonde optique 37 (non représentée) comprenant la source de lumière 28, la lame séparatrice 34 et l'optique de focalisation 36.

Le dispositif d'analyse 32 est alors propre à analyser le signal émis par l'analyte en réponse au faisceau généré par ladite sonde optique 37.

Autrement dit, lorsque la source de lumière 28 produit un faisceau lumineux d'excitation permettant une émission d'un signal en réponse d'un analyte de l'échantillon 16, ledit signal de réponse est alors analysé par le dispositif d'analyse 32.

Lorsque la densité optique 30 est dans la position déployée, le faisceau lumineux généré par la source de lumière 28 est suffisamment atténué (typiquement d'un facteur compris entre 10 et 1000) pour être utilisé en tant que faisceau pour un positionnement optimal de l'analyte, préalablement à l'analyse de ce dernier par le moyen d'analyse 32.

Le dispositif d'analyse 32 comprend généralement une optique de focalisation (lentille achromatique) qui permet de focaliser le signal émis par l'analyte. Le dispositif d'analyse 32 peut être solidaire du corps 20, ou être déporté à l'extérieur du système 10. Dans un tel cas, le signal émis par l'analyte est guidé vers le dispositif 32 au moyen d'un couplage optique, par exemple une fibre optique, solidaire du corps 20. Un tel moyen de couplage optique est alors considéré comme faisant partie du dispositif d'analyse 32.

La lame séparatrice 34 est agencée de manière à réfléchir le faisceau émis par la source lumineuse 28 et à transmettre la lumière collectée par l'optique 36 au dispositif d'analyse 32.

En outre, la lame séparatrice est positionnée à 45° du faisceau émis par la source lumineuse 28 et à 45° du faisceau transmis. Il en résulte que le faisceau lumineux réfléchi par la lame séparatrice est aligné avec le faisceau issu de la sonde optique. 37.

L'optique 36 est propre à transmettre de la lumière vers l'échantillon 16 et à collecter de la lumière issue de l'échantillon 16.

Selon l'exemple de la figure 1, l'optique 36 est un objectif de microscope. L'échantillon 16 comporte des analytes reposant sur un substrat.

Le substrat est un milieu dont la transmission dans la gamme 400 nanomètres (nm) à 700 nm est supérieure ou égale à 30%.

Par exemple, le substrat est une lamelle de verre.

A titre d'exemple, les analytes sont des microparticules ou des agrégats de particules de taille micrométrique. A titre d'exemple, les particules sont des organismes ou des particules inorganiques.

Les organismes comprennent les cellules eucaryotes et procaryotes (par exemple des champignons, des globules rouges, des globules blancs ou des plaquettes, des bactéries ou colonies bactériennes) et les organismes acellulaires (virus et prion notamment)

Selon les cas, les cellules sont isolées ou incluses dans des tissus organiques.

Les organismes présentent généralement des dimensions inférieures ou égales à dix microns (µm). De préférence, les organismes considérés dans l'invention ont des dimensions inférieures ou égales à 1 µm.

Le porte-échantillon 18 comporte un dispositif d'imagerie sans lentille 38, un moyen de translation latérale 40 et un moyen de translation transversale 42.

Le dispositif d'imagerie sans lentille 38 comporte un photodétecteur matriciel 44.

D'une façon générale, le terme imagerie sans lentille désigne la formation d'une image par un photodétecteur matriciel placé face à l'analyte, sans recourir à une optique de grossissement entre le photodétecteur et l'analyte.

Le photodétecteur matriciel 44 est propre à établir une figure de diffraction transmise par l'analyte de l'échantillon 16, la figure de diffraction correspondant à l'image des ondes diffusées élastiquement par un ou plusieurs analytes contenus dans l'échantillon 16. Cette image de diffraction est formée au niveau du photodétecteur matriciel 44 lors de l'éclairement de l'échantillon 16 par un faisceau issu de la source lumineuse 28.

Le photodétecteur matriciel 44 est un capteur d'image dans un plan perpendiculaire à l'axe vertical Z.

Le photodétecteur matriciel 44 est un capteur d'image pixélisé, par exemple un capteur CMOS (acronyme de l'anglais Complementary Metal-Oxyde semi-conductor).

Selon une variante, le photodétecteur matriciel 44 est un capteur CCD (acronyme de l'anglais Charged-Coupled Device).

Le photodétecteur matriciel 44 comporte en complément des microlentilles, non représentées, chaque microlentille étant disposée au dessus d'un pixel correspondant. De telles microlentilles sont intégrées au photodétecteur matriciel 44. Ces microlentilles permettent d'améliorer le rendement de collecte et ne forment pas une optique de grossissement disposée entre l'échantillon 16 et le photodétecteur matriciel 44.

De ce fait, le photodétecteur matriciel 44 est apte à former une image de l'échantillon 16, tout en étant placé à une faible distance de l'échantillon 16. Par faible distance, il est entendu une distance inférieure à quelques centimètres (cm), de préférence inférieure à 1 cm, préférentiellement inférieure à 5 mm et encore préférentiellement 1 mm..

Le dispositif d'imagerie sans lentille 38 est positionné sur le moyen de translation latérale 40. Le moyen de translation latérale 40 est positionné sur le moyen de translation transversale 42.

Le moyen de translation latérale 40 permet de faire varier la position du porte-échantillon 18 par rapport à l'ensemble 14 le long d'une direction parallèle à l'axe X.

Le moyen de translation latérale 40 est une platine motorisée.

Le moyen de translation transversale 42 permet de faire varier la position du porte-échantillon 18 par rapport à l'ensemble 14 le long d'une direction parallèle à l'axe Y.

Le moyen de translation transversale 42 est une platine motorisée.

Le moyen de translation latérale 40 et le moyen de translation transversale 42 sont donc propres à modifier la position de l'échantillon 16 dans un plan qui est orthogonal à la figure 1. Ainsi, le porte-échantillon 18 est déplaçable dans un plan orthogonal au faisceau lumineux produit par la source 28.

Le fonctionnement du système optique 10 va maintenant être décrit en référence à un procédé d'analyse de l'analyte de l'échantillon 16 à l'aide du faisceau lumineux F de la sonde d'analyse 37.

Le procédé comprend le réglage de la position relative de l'analyte de l'échantillon 16 par rapport au faisceau lumineux F. Un exemple de réglage de cette position relative est illustré dans la suite.

Le procédé comporte alors une étape d'illumination de l'analyte de l'échantillon 16 par un faisceau issu de la source lumineuse 28.

A cette étape d'illumination, le faisceau lumineux F est atténué par le moyen d'atténuation 30.

Le faisceau lumineux F émis par la source lumineuse 28 est diffusé par l'analyte de l'échantillon 16.

Le dispositif d'imagerie sans lentille 38 prend alors une image en transmission des faisceaux diffusés par l'analyte de l'échantillon 16 pour établir une figure de diffraction notée FD dans la suite.

Le procédé comprend une étape de modification de la position relative de l'analyte de l'échantillon 16 par rapport au faisceau lumineux F en fonction d'au moins une propriété de la figure de diffraction FD.

L'étape de modification de la position relative de l'échantillon 16 par rapport au faisceau lumineux F comprend une étape de positionnement de l'analyte par rapport au faisceau lumineux F, de façon à ce que l'analyte soit aligné par rapport à l'axe du faisceau lumineux F. Par positionnement, il est entendu :
- un alignement de l'analyte de l'échantillon 16 dans un plan perpendiculaire au faisceau lumineux F,
- une modification de la distance entre la source lumineuse 28 et l'analyte de l'échantillon 16 selon l'axe de propagation du faisceau lumineux F.
D'une façon générale, le positionnement comprend l'une ou l'autre de ces étapes, ou leur combinaison.

D'une façon générale, l'alignement consiste à modifier la position de l'analyte par rapport au faisceau lumineux F dans un plan perpendiculaire à l'axe de propagation, de façon à ce que l'analyte soit positionné dans l'axe de propagation du faisceau lumineux.

Lorsque la distance selon la direction verticale Z entre l'analyte et l'ensemble 14 est suffisamment élevée, le faisceau lumineux F produit une tâche lumineuse sur l'image en transmission, dans laquelle peuvent être distinguées plusieurs motifs de diffraction. Le centrage sur l'axe de propagation consiste alors à sélectionner un motif de diffraction d'intérêt dans la figure de diffraction FD, correspondant à l'analyte que l'on souhaite analyser, et à placer ce motif de diffraction au centre de ladite tâche lumineuse. Il s'agit d'un centrage grossier, basé sur la position du motif de diffraction d'intérêt par rapport à ladite tâche lumineuse. De ce fait, l'étape d'alignement est basée sur l'utilisation de la propriété suivante de la figure de diffraction FD : la position du motif de diffraction d'intérêt par rapport à ladite tâche lumineuse.

Lorsque la distance selon la direction verticale Z entre l'analyte et l'ensemble 14 se réduit, sur la figure de diffraction FD, la tâche lumineuse formée par le faisceau lumineux F correspond à un motif de diffraction produit par l'analyte. Il est procédé alors à un réglage fin de l'alignement, basé sur un autre critère de la figure de diffraction FD : la morphologie de la figure de diffraction FD. Par morphologie, il est entendu la forme ou la distribution d'intensité de la figure de diffraction.

En effet, une figure de diffraction FD non symétrique indique que le faisceau F issu de la source lumineuse 28 et l'analyte de l'échantillon 16 ne sont pas alignés selon les directions latérale X et transversale Y.

En particulier, la figure de diffraction FD n'est pas symétrique lorsque la forme de la figure de diffraction ne l'est pas mais également lorsque la répartition de l'intensité diffusée n'est pas symétrique.

A titre d'exemple, supposons que la figure de diffraction FD observée soit une tâche d'Airy avec des anneaux ayant une intensité plus importante vers le haut de la figure de diffraction FD, cela indique que l'échantillon 16 doit être déplacé vers le bas de la figure de diffraction FD. Pour un déplacement adéquat de l'échantillon 16, il est alors observé une tâche d'Airy avec des anneaux ayant la même intensité dans toutes les directions.

Le déplacement de l'analyte de l'échantillon 16 est mis en oeuvre à l'aide du moyen de translation latérale 40 et du moyen de translation transversale 42.

A l'issue de l'étape de positionnement de l'analyte de l'échantillon 16, le faisceau lumineux F de la source lumineuse 28 est aligné sur l'analyte selon les directions X et Y.

De préférence, l'alignement comporte successivement le centrage grossier, permettant de sélectionner l'analyte d'intérêt et de le positionner grossièrement, puis le centrage fin.

En variante, l'alignement comporte un seul des deux centrages, par exemple le centrage fin.

Pour illustrer la mise en oeuvre de l'étape d'alignement de l'analyte de l'échantillon 16, trois exemples vont être maintenant décrits.

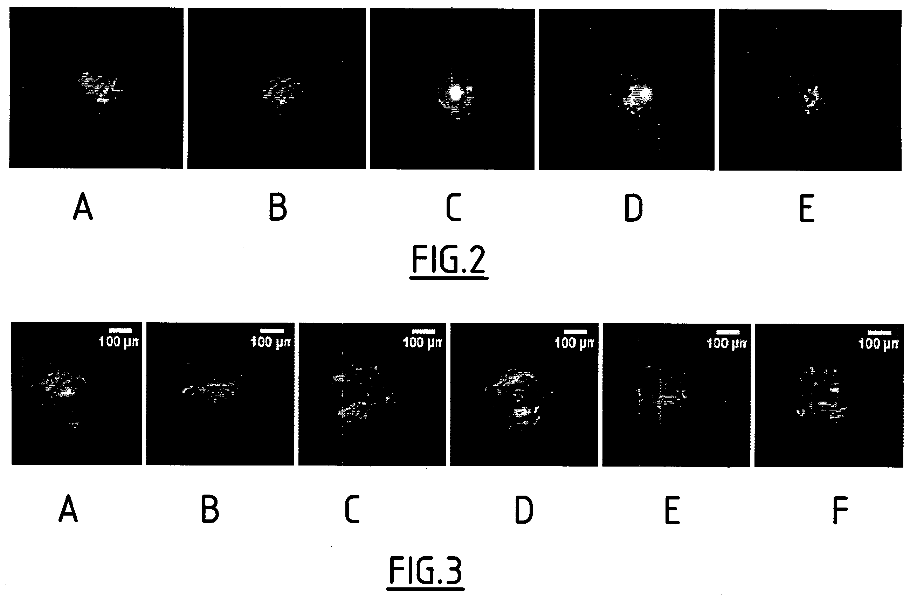

Dans un premier exemple correspondant aux figures 2, l'analyte est une bactérie unique appelée Staphylococcus Epidermis. Dans la classification ATCC (acronyme pour American Type Culture Collection), le Staphylococcus Epidermis est repéré par le numéro 14990. Le Staphylococcus Epidermis a une forme ronde.

Les différentes figures 2, à savoir les figures 2A, 2B, 2C, 2D et 2E, représentent les figures de diffraction obtenues pour différentes position du faisceau lumineux F de la source lumineuse 28 par rapport à la bactérie. Dans chacune des figures 2, la position de l'ensemble 14 selon la direction verticale est fixe de sorte que seule la position du faisceau lumineux F de la source lumineuse 28 par rapport à la bactérie selon au moins l'une des directions X et Y varie.

Les figures 2A, 2B, 2D et 2E montrent un mauvais alignement du faisceau lumineux F de la source lumineuse 28 sur la bactérie.

Sur les figures 2A et 2B, il est observé la présence de franges d'interférences dont le centre se trouve en haut à gauche par rapport au centre de la tâche du faisceau lumineux F sur l'échantillon 16. Ceci montre que la bactérie se situe en haut à gauche par rapport au centre de la tâche du faisceau lumineux F sur l'échantillon 16.

Sur les figures 2D et 2E, il est observé la présence de franges d'interférences dont le centre se trouve à droite par rapport au centre de la tâche du faisceau lumineux F sur l'échantillon 16. Ceci montre que la bactérie se situe à droite par rapport au centre de la tâche du faisceau lumineux F sur l'échantillon 16.

La figure 2C correspond au cas où la bactérie est située au centre de la tâche du faisceau lumineux F sur l'échantillon 16. En effet, il est observé des franges d'interférence ayant une intensité uniforme et concentriques.

En partant d'un cas où la bactérie est décentrée comme observé à la figure 2A pour parvenir au cas centré de la figure 2C, il convient de déplacer l'échantillon 16 selon la direction X et/ou selon la direction Y. En l'occurrence, l'échantillon 16 a été déplacé de 0,4 micromètre vers la droite (selon la direction X) et de 0,4 micromètre vers le bas (selon la direction Y).

Dans un deuxième exemple correspondant aux figures 3, l'analyte est une bactérie unique appelée Bacillus subtilis. Dans la classification ATCC (acronyme pour American Type Culture Collection), le Bacillus subtilis est repéré par le numéro 23857. Le Bacillus subtilis a une forme en bâtonnet.

Les différentes figures 3, à savoir les figures 3A, 3B, 3C, 3D, 3E et 3F représentent les figures de diffraction obtenues pour différentes position du faisceau lumineux F de la source lumineuse 28 par rapport à la bactérie. Dans chacune des figures 3, la position de l'ensemble 14 selon la direction verticale est fixe de sorte que seule la position du faisceau lumineux F de la source lumineuse 28 par rapport à la bactérie selon au moins l'une des directions X et Y varie.

Pour des raisons similaires aux raisons explicitées pour les figures 2A, 2B, 2D et 2E, les figures 3A, 3B, 3C, 3E et 3F montrent un mauvais alignement du faisceau lumineux F de la source lumineuse 28 sur la bactérie. En effet, les franges d'interférence observées ne présentent pas une intensité uniforme et ne sont pas parfaitement concentriques.

A contrario, la figure 3D correspond au cas où la bactérie est située au centre de la tâche du faisceau lumineux F sur l'échantillon 16. En effet, il est observé des franges d'interférence ayant une intensité uniforme et concentriques.

Dans ce deuxième exemple, pour passer de la configuration dans laquelle la bactérie est décentrée comme observé à la figure 3A pour parvenir à la configuration centrée de la figure 3D, l'échantillon 16 a été déplacé de 0,8 micromètre vers la droite (selon la direction X). Dans ce deuxième exemple, l'échantillon 16 n'a pas été déplacé selon la direction Y.

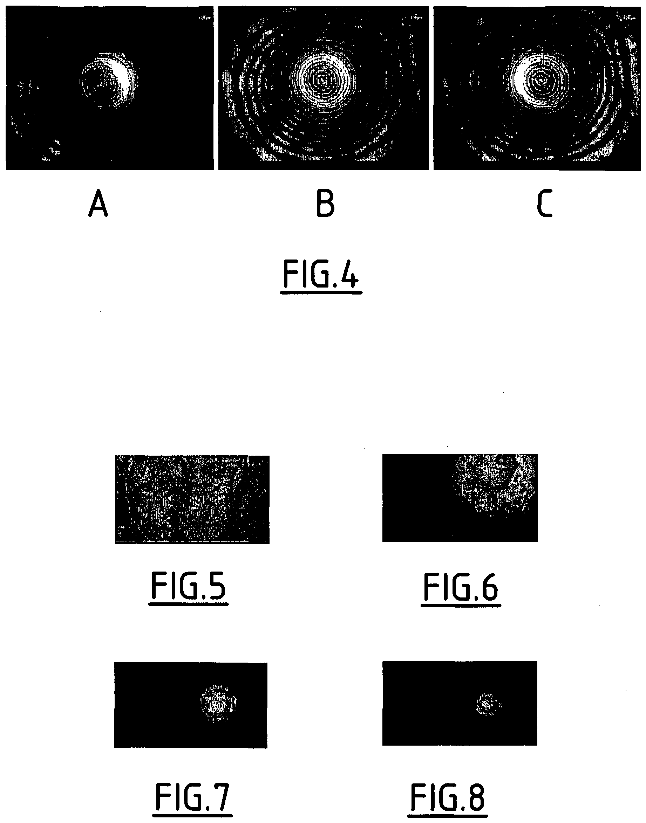

Dans un troisième exemple correspondant aux figures 4, l'analyte est une microcolonie bactérienne obtenue par croissance de bactéries Escherichia coli. Dans la classification ATCC (acronyme pour American Type Culture Collection), l'Escherichia coli est repéré par le numéro 23857. Les bactéries Escherichia coli ont été mises en culture sur un milieu nutritif gélosé pendant 6 heures. Le diamètre obtenu pour la microcolonie est de 150 microns.

Les différentes figures 4, à savoir les figures 4A, 4B et 4C, représentent les figures de diffraction obtenues pour différentes position du faisceau lumineux F de la source lumineuse 28 par rapport à la bactérie. Dans chacune des figures 4, la position de l'ensemble 14 selon la direction verticale est fixe de sorte que seule la position du faisceau lumineux F de la source lumineuse 28 par rapport à la bactérie selon au moins l'une des directions X et Y varie.

Dans le troisième exemple, le faisceau lumineux F de la source lumineuse 28 est considéré comme centré sur la microcolonie lorsque la figure représentée à la figure 4B est obtenue. En effet, l'intensité des anneaux de diffraction observés est distribuée de façon symétrique. Par contraste, les figures 4A et 4C correspondent à des configurations décentrées.

Dans ce deuxième exemple, pour passer de la configuration dans laquelle la colonie est décentrée comme observé à la figure 4A pour parvenir à la configuration centrée de la figure 4B, l'échantillon 16 a été déplacé de 11 micromètres vers la droite (selon la direction X). Dans ce deuxième exemple, l'échantillon 16 n'a pas été déplacé selon la direction Y. L'alignement implique le déplacement, selon la direction verticale, de l'ensemble 14 par l'utilisation du moyen de translation verticale 16, de façon à centrer l'analyte d'intérêt par rapport au faisceau lumineux.

L'alignement et la modification de la distance entre la source lumineuse 28 et l'analyte de l'échantillon 16 selon l'axe de propagation du faisceau lumineux F se font ainsi de manière concomitante pour qu'à la fin du positionnement, la position du motif de diffraction d'intérêt soit centré par rapport à ladite tâche lumineuse sur la figure de diffraction FD

En outre, l'alignement est notamment réalisé de façon itératif, en modifiant le centrage grossier dans le plan perpendiculaire au faisceau à chaque itération.

Selon le type d'analyse effectué, il est également utile d'ajuster la distance entre l'échantillon 16 et le support 14, de telle sorte que la taille du faisceau lumineux F, produit par la source lumineuse 28, coïncide avec la taille de l'analyte, ou soit inférieure à cette dernière. En effet, la section du faisceau lumineux F au niveau du plan de l'échantillon 16 varie en fonction de la distance entre l'objectif 36 et l'échantillon 16. En ajustant cette section aux dimensions de l'analyte, voire à une dimension plus faible, il est évité d'illuminer le voisinage de l'analyte. Il est alors évité l'émission d'un signal parasite, non spécifique à l'analyte.

Cet ajustement de la taille du faisceau lumineux F par rapport à l'analyte est obtenu à l'étape de modification de la position relative de l'analyte de l'échantillon 16 par rapport au faisceau lumineux F.

Dans ce cas, l'étape de modification de la position relative comprend également une étape de modification de la distance entre l'analyte et l'ensemble 14, selon la direction verticale Z, jusqu'à ce que l'analyte observé occulte le faisceau lumineux F issu de la source lumineuse 28, c'est-à-dire lorsqu'il n'est pas possible d'identifier un motif de diffraction mais une tâche diffuse, et lorsque cette tâche a une intensité lumineuse minimum en son centre.

Ainsi, le dispositif d'imagerie sans lentille 38 permet d'ajuster la taille du faisceau lumineux F dans le plan de l'échantillon 16.

Cet ajustement de la taille du faisceau lumineux F par rapport à l'analyte peut être complété en mettant en oeuvre une étape de modification de la position relative de l'analyte de l'échantillon 16 par rapport au faisceau lumineux F pour maximiser le rayonnement émis par l'analyte de l'échantillon 16 en réponse à l'excitation du faisceau lumineux F.

Le procédé comprend également l'arrêt de l'atténuation du faisceau lumineux F pour générer une excitation du faisceau lumineux F de plus grande amplitude.

Le procédé comporte alors une étape d'acquisition d'un signal d'analyse résultant du rayonnement émis par l'analyte de l'échantillon 16 en réponse à l'illumination par le faisceau lumineux F par le dispositif d'analyse 32, la source lumineuse 28 n'étant alors plus atténuée par le moyen d'atténuation 30.

L'observation du signal produit par le dispositif d'analyse 32 permet de modifier la distance entre l'analyte et le dispositif 14 pour optimiser au moins une caractéristique du signal d'analyse acquis.

Cette caractéristique est, par exemple, une intensité, un rapport signal sur bruit ou une résolution spectrale.

A l'issue de cette étape, la position relative de l'analyte de l'échantillon 16 par rapport au faisceau lumineux F est réglée.

Le procédé comprend ensuite une étape d'analyse par le dispositif d'analyse du rayonnement émis par l'analyte de l'échantillon 16 en réponse à l'illumination par le faisceau lumineux F.

Un exemple de mise en oeuvre d'un procédé d'analyse de l'analyte de l'échantillon 16 à l'aide du faisceau lumineux F d'une sonde 37 Raman est illustré par l'expérience présentée en référence aux figures 5 à 22.

Les images des figures 5 à 21 sont des images d'une figure de diffraction issues du photodétecteur matriciel 44. Chaque figure 5 à 21 correspond à une distance verticale entre l'ensemble 14 et l'échantillon 16.

Dans l'expérience présentée, le porte-échantillon 16 comporte une bactérie unique appelée Bacillus Cereus.

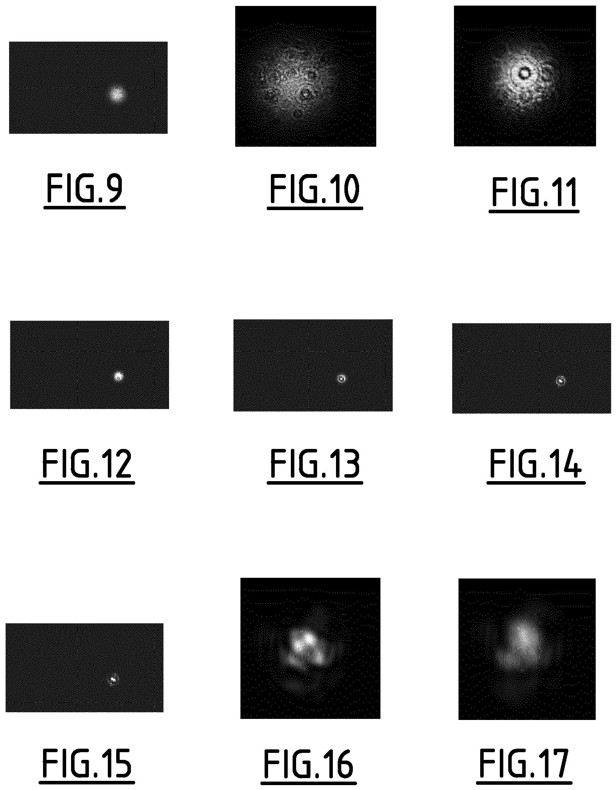

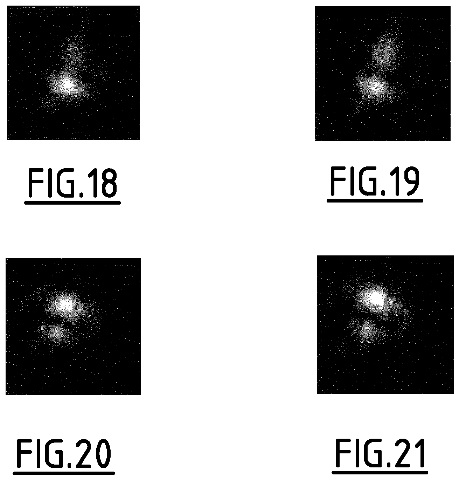

La figure 19 correspond à une distance de référence de 23 mm entre l'ensemble 14 et l'échantillon 16 puisque la figure 19 correspond au signal Raman maximal observé sur la figure 13.

Respectivement, la figure 5 correspond à une distance verticale entre l'ensemble 14 et l'échantillon 16 supérieure de 43,922 millimètres (mm) par rapport à la distance de référence ; la figure 6 à une distance supérieure de 10,922 mm ; la figure 7 à une distance supérieure de 3,222 mm ; la figure 8 à une distance supérieure de 2,122 mm ; la figure 9 à une distance supérieure de 1,022 mm ; la figure 10 à une distance supérieure de 722 µm ; la figure 11 à une distance supérieure de 252 µm ; la figure 12 à une distance supérieure de 162 µm ; la figure 13 à une distance supérieure de 77 µm ; la figure 14 à une distance supérieure de 56 µm ; la figure 15 à une distance supérieure de 45 µm ; la figure 16 à une distance supérieure de 30 µm ; la figure 17 à une distance supérieure de 21 µm ; la figure 18 à une distance supérieure de 2,6 µm ; la figure 20 à une distance inférieure de 5,0 µm et la figure 21 à une distance inférieure de 10,3 µm.

Dans les figures 5 à 12, la figure de diffraction obtenue sur le dispositif d'imagerie sans lentille 38 permet d'observer plusieurs analytes de l'échantillon 16. L'observation de l'échantillon 16 à l'aide du dispositif d'imagerie sans lentille 38 permet alors de disposer d'une vue d'ensemble, incluant différents analytes.

Lorsque la distance est inférieure à 252 µm par rapport à la distance de référence, la figure de diffraction d'un seul analyte est observée sur le dispositif d'imagerie sans lentille 38.

Ainsi, la modification de la position de l'échantillon 16 par rapport au support 14 permet de sélectionner un analyte d'intérêt et d'aligner ce dernier par rapport à l'axe du faisceau lumineux F.

Les figures 5 à 12 illustrent de ce fait le centrage grossier précédemment décrit.

Dans les figures 13 à 17, il est observé successivement, depuis la plus grande distance verticale jusqu'à la distance verticale la plus faible, que la taille de la région illuminée par la laser diminue depuis une taille supérieure à celle de la bactérie jusqu'à être égale à celle de la bactérie (cas de la figure 17, dans laquelle le faisceau est occulté par la bactérie).

Le faisceau laser et la bactérie sont alors alignés selon la direction Z.

Dans le cas particulier de cette analyse Raman, le réglage optimal est réalisé, à partir de la position dans laquelle la figure de diffraction est occultée, en ajustant la distance selon la direction verticale entre l'ensemble 14 et l'analyte en fonction du spectre Raman observé. Plus précisément, la distance optimale selon la direction verticale correspond à celle pour laquelle les pics, dans la zone d'intérêt considérée, sont les plus résolus et les plus intenses. Les figures 18 à 21 illustrent ce réglage basé sur le signal d'analyse.

Dans l'exemple représenté aux figures 18 à 21, le dispositif d'analyse 32 est un spectromètre Raman. L'ajustement de la distance est de l'ordre de quelques microns. La distance verticale est alors ajustée en fonction du spectre Raman, de façon à détecter le plus de pics dans la région spectrale d'intérêt correspondant aux signaux émis par des bactéries (i-e décalage compris entre 1000 et 1700 cm⁻¹). La valeur optimum est celle de la figure 19 (ou de la figure 18) : en effet, pour ces figures, le spectre Raman comporte davantage de pics suffisamment résolus) dans la zone d'intérêt. Par ailleurs, le signal parasite issu du voisinage de la bactérie est significativement réduit : la mesure est donc plus spécifique à l'analyte d'intérêt.

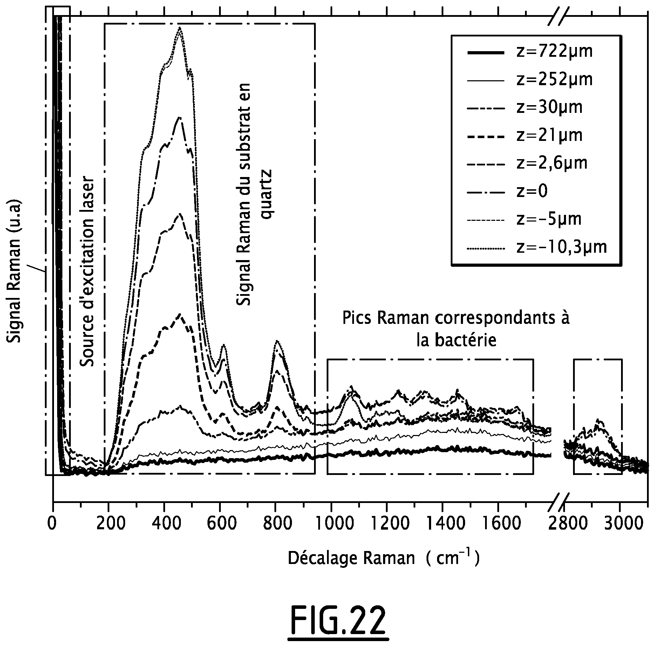

Les spectres obtenus dans les différentes positions des figures 10, 11, 16 à 21 sont représentés sur la figure 22. Comme annoncé, si la plage de longueurs d'onde comprises entre 200 cm⁻¹ et 925 cm⁻¹ n'est pas considérée puisqu'elle correspond à une signature spectrale du quartz de l'échantillon 16, il est observé que dans les plages de longueurs d'onde comprises respectivement entre 1 000 cm⁻¹ et 1 700 cm⁻¹ et 2 850 cm⁻¹ et 3 000 cm⁻¹, le signal Raman correspondant à la figure 19 (ou la figure 18) est le signal d'amplitude la plus grande.

Le procédé permet donc bien d'obtenir un alignement de la sonde sur l'analyte à observer.

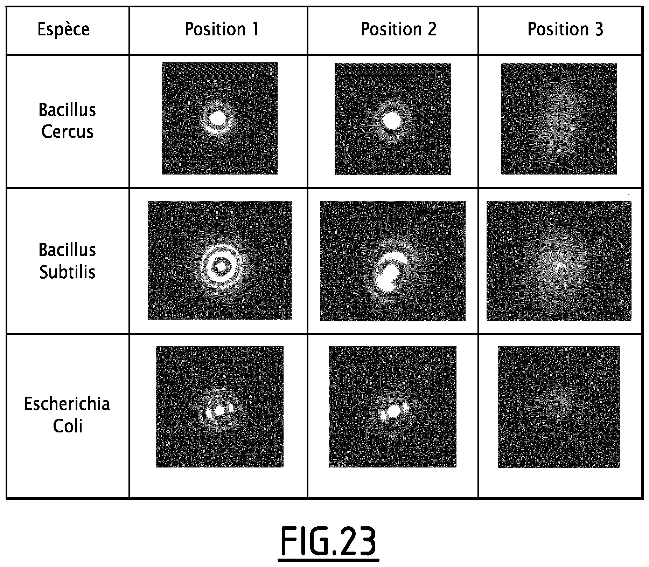

L'expérience décrite a été reproduite avec succès sur plusieurs bactéries différentes, dont notamment l'Escherichia Coli et le Bacillus Subtilis, et sur des cellules et staphylococcus epidermis SE9 (voir figure 23).

Le procédé d'alignement proposé n'implique pas une étape de changement d'objectif de collection. Il en résulte un gain de temps et une simplification du système optique 10 à utiliser aussi bien au niveau instrumental qu'au niveau logiciel.

Le procédé permet d'utiliser la même source lumineuse 28 pour le positionnement (i-e alignement de l'analyte sur le faisceau F et ajustement de la taille du faisceau F dans le plan de l'échantillon 16) de l'analyte et pour son analyse sans utilisation d'optique(s) positionnée(s) en dehors de l'ensemble 14.

L'alignement est avantageusement réalisé lorsque la source lumineuse 28 est atténuée, par exemple au moyen d'une densité optique 30, l'analyse étant alors réalisée sans atténuation.

Ceci garantit un bon alignement du faisceau issu de la source lumineuse 28 et de la sonde sans impliquer une vérification de l'alignement des optiques éventuelles. Il en résulte une amélioration de la robustesse du système optique 10. Le système optique 10 est donc utilisable dans des systèmes transportables sur le terrain.

Le procédé présenté est facilement automatisable à l'aide de traitement logiciel et par utilisation d'un contrôle en asservissement des moyens de translations 26, 40, 42.

Dans le procédé, le faisceau sonde issu de la source lumineuse 28 et le dispositif d'analyse 32 se déplacent ensemble pendant l'étape d'alignement vertical alors que l'échantillon 16 est fixe. Par rapport à des systèmes conventionnels dans lequel c'est l'échantillon 16 dont la position est modifiée selon la direction verticale, il est ainsi évité une étape de réalignement du faisceau selon les directions latérale X et transversale Y pour chaque nouvelle position de l'échantillon selon la direction verticale Z.

Selon une variante, la figure de diffraction FD obtenue par le photodétecteur matriciel 44 est également utilisée pour opérer un préclassement de l'analyte contenu dans l'échantillon 16.

La figure de diffraction permet effectivement d'avoir accès à la taille, la forme de l'analyte.

Cette information permet notamment d'identifier l'analyte.

La figure 23 associe dans un tableau une pluralité de figures de diffraction respectivement à un analyte observé et une distance verticale entre la source lumineuse 28 et l'échantillon 16 correspondant à la distance de prise de l'image par le dispositif d'imagerie 38.

La première espèce est un Bacillus Cereus, la deuxième espèce un Bacillus Subtilis et la troisième espèce un Escherichia Coli.

Dans le tableau de la figure 23, à chaque espèce, sont associées trois figures de diffraction prises pour trois distances différentes (position 1, position 2 et position 3)

Il est bien observé que les formes des figures de diffractions sont différentes selon l'analyte considéré, ce qui rend possible une identification de l'analyte à partir de l'observation de la figure de diffraction.

Le procédé s'applique pour tout type de dispositif d'analyse 32. A titre d'exemple, le système optique 10 présenté en référence à la figure 1 est également utilisable avec d'autres dispositifs d'imageries comme la diffraction en réflexion, la fluorescence ou l'auto-fluorescence.

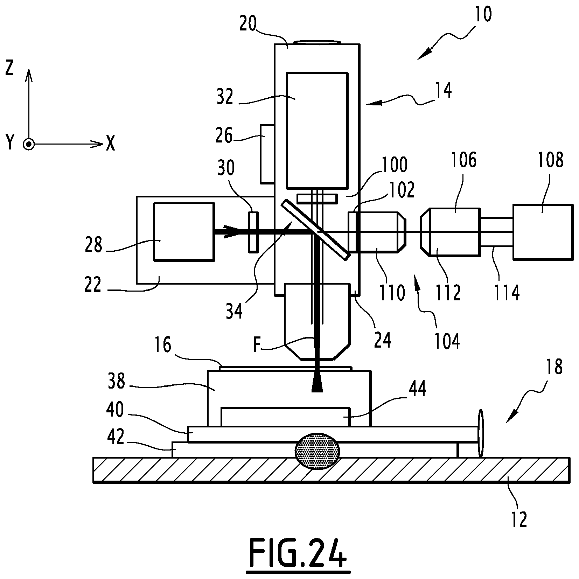

Un deuxième mode de réalisation du système optique est également présenté à la figure 24.

Le système optique 10 comporte les mêmes éléments que le système optique de la figure 1.

Le système optique 10 comporte également un miroir 100 positionné entre le dispositif d'analyse 32 et la lame séparatrice 34.

Le miroir 100 est un miroir plan.

Le miroir 100 est amovible entre une première position dans laquelle il réfléchit le faisceau transmis par la lame séparatrice 34 et une deuxième position dans laquelle il n'interagit pas avec le faisceau transmis.

Le système optique 10 comporte également un filtre de fluorescence 102 propre à filtrer un faisceau lumineux.

Le filtre 102 est positionné de manière à filtrer un faisceau réfléchi par le miroir 100 et la lame séparatrice 34 lorsque le miroir 100 est dans la première position.

Le système optique 10 comporte aussi un dispositif d'imagerie avec lentille 104.

Selon l'exemple de la figure 24, le dispositif d'imagerie avec lentille 104 comprend une optique de grossissement 106 et une caméra 108.

L'optique de grossissement 106 comprend un premier objectif de microscope 110 monté sur l'ensemble 14 et un deuxième objectif de microscope 112 monté sur la caméra 108 à l'aide d'une bague allonge 114.

L'optique de grossissement 106 est propre à obtenir un grossissement du faisceau et à le focaliser sur les photodétecteurs de la caméra 108.

Dans ce mode de réalisation, le système optique 10 est utilisé pour effectuer des imageries par fluorescence.

En l'absence du filtre 102, le système optique 10 est utilisé pour effectuer des imageries par diffraction en réflexion.

En l'absence de filtre 102 et en éclairant en lumière blanche l'échantillon 16, le système optique 10 est utilisé à la fois pour effectuer des imageries par diffraction en réflexion, et pour effectuer des imageries en lumière blanche dans l'espace direct.

Ce système optique 10 permet également la mise en oeuvre du procédé d'alignement proposé pour le premier mode de réalisation du système optique 10.

De ce fait, dans le mode de réalisation proposé, il est possible d'effectuer un seul alignement pour effectuer deux analyses différentes successives sur l'échantillon 16.

En outre, bien que les différents modes de réalisation aient été présentés en référence à un dispositif d'imagerie 38 sans lentilles, le procédé peut aussi être mis en oeuvre avec un dispositif d'imagerie 38 avec lentilles pourvu que celui-ci permette des observations dans l'espace de Fourier. En effet, selon l'invention, il est proposé d'aligner un analyte en utilisant des propriétés observées dans l'espace de Fourier et non dans l'espace direct comme c'est le cas dans l'état de la technique. Le procédé de réglage qui en résulte est plus rapide à mettre en oeuvre que les procédés de réglage de l'état de la technique.

## Revendications

1. Procédé de réglage de la position relative d'un analyte d'un échantillon (16) par rapport à un faisceau lumineux (F), le faisceau lumineux (F) étant issu d'une source lumineuse (28) et se propageant selon un axe de propagation (Z), le procédé comprenant :
- l'illumination de l'analyte de l'échantillon (16) par le faisceau lumineux (F),
- la prise par un dispositif d'imagerie (38) d'une image en transmission des faisceaux diffusés par l'analyte de l'échantillon (16) pour établir une figure de diffraction, et
- la modification de la position relative de l'analyte de l'échantillon (16) par rapport au faisceau lumineux (F) en fonction d'au moins une propriété de la figure de diffraction,
le procédé étant **caractérisé en ce que** :
la modification de la position relative de l'analyte de l'échantillon (16) par rapport au faisceau lumineux (F) comprend les étapes suivantes:
- l'alignement de l'analyte de l'échantillon (16) sur l'axe de propagation (Z) du faisceau lumineux (F),
- la modification de la distance entre la source lumineuse (28) et l'analyte de l'échantillon (16) selon l'axe de propagation (Z) pour que le motif de diffraction résultant des faisceaux diffusés par l'analyte de l'échantillon (16) soit au centre de la figure de diffraction,
- l'ajustement de la distance entre la source lumineuse (28) et l'analyte de l'échantillon (16) selon l'axe de propagation (Z) jusqu'à ce que l'analyte de l'échantillon (16) occulte le faisceau lumineux (F), et
- la maximisation du rayonnement émis par l'analyte de l'échantillon (16) en réponse à l'excitation d'un faisceau lumineux issu de la source lumineuse (28).

2. Procédé de réglage selon la revendication 1, dans lequel chaque étape est mise en oeuvre en fonction d'une propriété de la figure de diffraction, la propriété étant différente pour chacune des étapes.

3. Procédé de réglage la revendication 1 ou 2, dans lequel la prise par un dispositif d'imagerie (38) d'une image en transmission des faisceaux diffusés par l'analyte de l'échantillon (16) pour établir une figure de diffraction et la modification de la position relative de l'analyte de l'échantillon (16) par rapport au faisceau lumineux (F) en fonction d'au moins une propriété de la figure de diffraction sont mises en oeuvre plusieurs fois.

4. Procédé de réglage selon l'une quelconque des revendications 1 à 3, dans lequel le faisceau lumineux (F) forme une tâche dans l'image en transmission, la propriété étant la morphologie de la figure de diffraction ou la position de la figure de diffraction par rapport à la tâche formée par le faisceau lumineux (F) dans l'image en transmission.

5. Procédé de réglage selon l'une quelconque des revendications 1 à 4, dans lequel le procédé comprend, en outre :
- l'acquisition d'un signal d'analyse résultant du rayonnement émis par l'analyte de l'échantillon (16) en réponse à l'illumination par le faisceau lumineux (F) par un dispositif d'analyse (32), et
- la modification de la position relative de l'analyte de l'échantillon (16) par rapport au faisceau (F) pour optimiser au moins une caractéristique du signal d'analyse acquis.

6. Procédé de réglage selon l'une quelconque des revendications 1 à 5, dans lequel le dispositif d'imagerie (38) est un dispositif d'imagerie sans lentilles.

7. Procédé d'analyse d'un analyte d'un échantillon (16) à l'aide d'un faisceau lumineux (F) **caractérisé en ce que** le procédé comprend :
- le réglage de la position relative de l'analyte de l'échantillon (16) par rapport au faisceau lumineux (F) par mise en oeuvre d'un procédé de réglage selon l'une quelconque des revendications 1 à 6, et
- l'analyse par un dispositif d'analyse (32) du rayonnement émis par l'analyte de l'échantillon (16) en réponse à l'illumination par le faisceau lumineux (F).

8. Procédé d'analyse selon la revendication 7, dans lequel le procédé comprend successivement :
- l'atténuation du faisceau lumineux (F) par un moyen d'atténuation (30),
- le réglage de la position relative de l'analyte de l'échantillon (16) par rapport au faisceau lumineux,
- l'arrêt de l'atténuation du faisceau lumineux (F) et
- l'analyse par le dispositif d'analyse (32).

9. Procédé d'analyse selon la revendication 7 ou 8, dans lequel le procédé comprend, en outre :
- la détermination de caractéristiques de l'analyte de l'échantillon (16) à partir de la figure de diffraction établie par le dispositif d'imagerie (38).

10. Porte-échantillon (18) propre à porter un échantillon comprenant au moins un analyte, le porte-échantillon (18), le porte-échantillon (18) comprenant :
- un dispositif d'imagerie (38) propre à prendre une image en transmission des faisceaux diffusés par un analyte de l'échantillon pour établir une figure de diffraction, et
- une unité de réglage de la position relative de l'analyte d'un échantillon par rapport à un faisceau lumineux, le faisceau lumineux (F) étant issu d'une source lumineuse (28) et se propageant selon un axe de propagation (Z), l'unité de réglage étant propre à modifier la position relative de l'analyte de l'échantillon en fonction d'au moins une propriété de la figure de diffraction, l'unité de réglage étant en outre propre à mettre en oeuvre les étapes suivantes :
- l'alignement de l'analyte de l'échantillon (16) sur l'axe de propagation (Z) du faisceau lumineux (F), et
- la modification de la distance entre la source lumineuse (28) et l'analyte de l'échantillon (16) selon l'axe de propagation (Z) pour que le motif de diffraction résultant des faisceaux diffusés par l'analyte de l'échantillon (16) soit au centre de la figure de diffraction,
le porte-échantillon (18) étant **caractérisé en ce que** l'unité de réglage étant en outre propre à mettre en oeuvre les étapes suivantes :
- l'ajustement de la distance entre la source lumineuse (28) et l'analyte de l'échantillon (16) selon l'axe de propagation (Z) jusqu'à ce que l'analyte de l'échantillon (16) occulte le faisceau lumineux (F), et
- la maximisation du rayonnement émis par l'analyte de l'échantillon (16) en réponse à l'excitation d'un faisceau lumineux issu de la source lumineuse (28).

11. Porte-échantillon (18) selon la revendication 10, dans lequel le dispositif d'imagerie (38) est un dispositif d'imagerie sans lentilles.

12. Système optique (10) comportant :
- une source lumineuse (28) propre à illuminer un analyte de l'échantillon par un faisceau lumineux (F),
- le porte-échantillon (18) selon la revendication 10 ou 11.

13. Système optique (10) selon la revendication 12, dans lequel l'unité de réglage comprend :
- un moyen de translation de la source lumineuse (28) selon la direction de propagation (Z) du faisceau lumineux (F), et
- un moyen de déplacement du porte-échantillon (18, 42) dans le plan perpendiculaire à la direction de propagation (Z) du faisceau lumineux (F),

14. Système optique (10) selon la revendication 13 comportant, en outre :
- un ensemble (14) comportant :
- la source lumineuse (28), et
- un dispositif d'analyse (32),
le moyen de translation de la source lumineuse (28) étant propre à déplacer l'ensemble (14) selon la direction de propagation (Z) du faisceau lumineux (F).

## Patentansprüche

1. Verfahren zum Regeln der relativen Position eines Analyten einer Probe (16) in Bezug auf einen Lichtstrahl (F), wobei der Lichtstrahl (F) aus einer Lichtquelle (28) stammt und sich entlang einer Ausbreitungsachse (Z) ausbreitet, wobei das Verfahren aufweist:
- Beleuchten des Analyten der Probe (16) mittels des Lichtstrahls (F),
- Aufnehmen mittels einer Abbildungsvorrichtung (38) eines Transmissionsbildes von Strahlen, die mittels des Analyten der Probe (16) gestreut werden, um ein Beugungsbild zu erstellen, und
- Modifizieren der relativen Position des Analyten der Probe (16) in Bezug auf den Lichtstrahl (F) in Abhängigkeit von mindestens einer Eigenschaft des Beugungsbildes,
wobei das Verfahren **dadurch gekennzeichnet ist, dass**:
- das Modifizieren der relativen Position des Analyten der Probe (16) in Bezug auf den Lichtstrahl (F) die folgenden Schritte aufweist:
- Ausrichten des Analyten der Probe (16) mit der Ausbreitungsachse (Z) des Lichtstrahls (F),
- Modifizieren des Abstands zwischen der Lichtquelle (28) und dem Analyten der Probe (16) entlang der Ausbreitungsachse (Z), damit das Beugungsmuster, welches aus den Strahlen resultiert, die mittels des Analyten der Probe (16) gestreut werden, im Zentrum des Beugungsbildes ist,
- Einstellen des Abstandes zwischen der Lichtquelle (28) und dem Analyten der Probe (16) entlang der Ausbreitungsachse (Z), bis der Analyt der Probe (16) den Lichtstrahl (F) verdeckt, und
- Maximieren der Strahlung, die mittels des Analyten der Probe (16) in Antwort auf die Anregung eines Lichtstrahls, der aus der Lichtquelle (28) stammt, emittiert wird.

2. Verfahren zum Regeln gemäß Anspruch 1, wobei jeder Schritt in Abhängigkeit von einer Eigenschaft des Beugungsbildes durchgeführt wird, wobei die Eigenschaft für jeden der Schritte unterschiedlich ist.

3. Verfahren zum Regeln dem Anspruch 1 oder 2, wobei das Aufnehmen mittels einer Abbildungsvorrichtung (38) eines Transmissionsbildes von Strahlen, die mittels des Analyten der Probe (16) gestreut werden, um ein Beugungsbild zu erstellen, und das Modifizieren der relativen Position des Analyten der Probe (16) in Bezug auf den Lichtstrahl (F) in Abhängigkeit von mindestens einer Eigenschaft des Beugungsbildes mehrere Male durchgeführt werden.

4. Verfahren zum Regeln gemäß irgendeinem der Ansprüche 1 bis 3, wobei der Lichtstrahl (F) einen Fleck in dem Transmissionsbild bildet, wobei die Eigenschaft die Morphologie des Beugungsbildes oder die Position des Beugungsbildes mit Bezug auf den Fleck, der mittels des Lichtstrahls (F) in dem Transmissionsbild gebildet wird, ist.

5. Verfahren zum Regeln gemäß irgendeinem der Ansprüche 1 bis 4, wobei das Verfahren ferner aufweist:
- Erfassen eines Analysesignals, welches aus der Strahlung resultiert, die mittels des Analyten der Probe (16) in Antwort auf das Beleuchten mittels des Lichtstrahls (F) emittiert wird, mittels einer Analysevorrichtung (32) und
- Modifizieren der relativen Position des Analyten der Probe (16) in Bezug auf den Strahl (F), um mindestens ein Charakteristikum des erfassten Analysesignals zu optimieren.

6. Verfahren zum Regeln gemäß irgendeinem der Ansprüche 1 bis 5, wobei die Abbildungsvorrichtung (38) eine Abbildungsvorrichtung ohne Linsen ist.

7. Verfahren zum Analysieren eines Analyten einer Probe (16) mit Hilfe eines Lichtstrahls (F), **dadurch gekennzeichnet, dass** das Verfahren aufweist:
- Regeln der relativen Position des Analyten der Probe (16) in Bezug auf den Lichtstrahl (F) mittels Durchführens eines Verfahrens zum Regeln gemäß irgendeinem der Ansprüche 1 bis 6 und
- Analysieren mittels einer Analysevorrichtung (32) der Strahlung, die mittels des Analyten der Probe (16) in Antwort auf das Beleuchten mittels des Lichtstrahls (F) emittiert wird.

8. Verfahren zum Analysieren gemäß Anspruch 7, wobei das Verfahren sukzessive aufweist:
- Abschwächen des Lichtstrahls (F) mittels eines Abschwächungsmittels (30),
- Regeln der relativen Position des Analyten der Probe (16) in Bezug auf den Lichtstrahl,
- Stoppen des Abschwächens des Lichtstrahls (F) und
- Analysieren mittels der Analysevorrichtung (32).

9. Verfahren zum Analysieren gemäß Anspruch 7 oder 8, wobei das Verfahren ferner aufweist:
- Ermitteln von Charakteristika des Analyten der Probe (16) ausgehend von dem Beugungsbild, welches mittels der Abbildungsvorrichtung (38) erstellt wird.

10. Probenträger (18), der imstande ist, eine Probe zu tragen, welche mindestens einen Analyten aufweist, wobei der Probenträger (18), der Probenträger (18) aufweist:
- eine Abbildungsvorrichtung (38), die imstande ist, ein Transmissionsbild von Strahlen aufzunehmen, die mittels eines Analyten der Probe gestreut werden, um ein Beugungsbild zu erstellen, und
- eine Einheit zum Regeln der relativen Position des Analyten einer Probe in Bezug auf einen Lichtstrahl, wobei der Lichtstrahl (F) aus einer Lichtquelle (28) stammt und sich entlang einer Ausbreitungsachse (Z) ausbreitet, wobei die Einheit zum Regeln imstande ist, um die relative Position des Analyten der Probe in Abhängigkeit von mindestens einer Eigenschaft des Beugungsbildes zu modifizieren, wobei die Einheit zum Regeln ferner imstande ist, um die folgenden Schritte durchzuführen:
- Ausrichten des Analyten der Probe (16) mit der Ausbreitungsachse (Z) des Lichtstrahls (F) und
- Modifizieren des Abstands zwischen der Lichtquelle (28) und dem Analyten der Probe (16) entlang der Ausbreitungsachse (Z), damit das Beugungsmuster, welches aus den Strahlen resultiert, die mittels des Analyten der Probe (16) gestreut werden, im Zentrum des Beugungsbildes ist,
wobei der Probenträger (18) **dadurch gekennzeichnet ist, dass** die Einheit zum Regeln ferner imstande ist, um die folgenden Schritte durchzuführen:
- Einstellen des Abstandes zwischen der Lichtquelle (28) und dem Analyten der Probe (16) entlang der Ausbreitungsachse (Z), bis der Analyt der Probe (16) den Lichtstrahl (F) verdeckt, und
- Maximieren der Strahlung, die mittels des Analyten der Probe (16) in Antwort auf die Anregung eines Lichtstrahls, der aus der Lichtquelle (28) stammt, emittiert wird.

11. Probenträger (18) gemäß Anspruch 10, wobei die Abbildungsvorrichtung (38) eine Abbildungsvorrichtung ohne Linsen ist.

12. Optisches System (10), welches aufweist:
- eine Lichtquelle (28), die imstande ist, um einen Analyten der Probe mittels eines Lichtstrahls (F) zu beleuchten,
- den Probenträger (18) gemäß Anspruch 10 oder 11.

13. Optisches System (10) gemäß Anspruch 12, wobei die Einheit zum Regeln aufweist:
- ein Mittel zum Verschieben der Lichtquelle (28) entlang der Ausbreitungsrichtung (Z) des Lichtstrahls (F) und
- ein Mittel zum Bewegen des Probenträgers (18, 42) in der Ebene, die senkrecht zur Ausbreitungsrichtung (Z) des Lichtstrahls (F) ist.

14. Optisches System (10) gemäß Anspruch 13, welches ferner aufweist:
- eine Gruppe (14), welche aufweist:
- die Lichtquelle (28) und
- eine Analysevorrichtung (32),
wobei das Mittel zum Verschieben der Lichtquelle (28) imstande ist, um die Gruppe (14) entlang der Ausbreitungsrichtung (Z) des Lichtstrahls (F) zu bewegen.

## Claims

1. A method for regulating the relative position of an analyte of a sample (16) in relation to a light beam (F), the light beam (F) stems from a light source (28) and propagates along an axis of propagation (Z), the method comprising :
- illuminating the analyte of the sample (16) with the light beam (F),
- taking with the imaging device (38) a transmission image of the beams scattered by the analyte of the (16) for establishing a diffraction pattern, and
- modifying the relative position of the analyte of the sample (16) in relation to the light beam (F) according to at least one property of the diffraction pattern,
the method being **characterized in that**:
the modification of the position of the analyte of the sample (16) in relation to the light beam (F) comprises at least one of the following steps:
- aligning the analyte of the sample (16) on the axis of propagation (Z) of the light beam (F),
- modifying the distance between the light source (28) and the analyte of the sample (16) along the axis of propagation (Z) so that the diffraction pattern resulting from the beams diffracted by the analyte of the sample (16) is at the center of the diffraction pattern,
- adjusting the distance between the light source (28) and the analyte of the sample (16) along the axis of propagation (Z) until the analyte of the sample (16) occults the light beam (F), and
- maximizing the radiation emitted by the analyte of the sample (16) in response to the excitation of a light beam from the light source (28).

2. The regulation method according to claim 1, wherein each step is applied according to a property of the diffraction pattern, the property being different for each of the steps.

3. The regulation method according to claim 1 or 2, wherein the taking with an imaging device (38) of a transmission image of the beams scattered by the analyte of the sample (16) for establishing a diffraction pattern and the modification of the relative position of the analyte of the sample (16) in relation to the light beam (F) according to at least one property of the diffraction pattern are carried out several times.

4. The regulation method according to any one of claims 1 to 3, wherein the property is the morphology of the diffraction pattern or the position of the diffraction pattern with respect to the spot formed by the light beam (F) in the transmission image.

5. The regulation method according to any one of claims 1 to 4, wherein the method further comprises:
- the acquisition of an analysis signal resulting from the radiation emitted by the analyte of the sample (16) in response to the illumination with the light beam (F) by an analysis device (32), and
- modifying the relative position of the analyte of the sample (16) in relation to the beam (F) in order to optimize at least one characteristic of the acquired analysis signal.

6. The regulation method according to any one of claims 1 to 5, wherein the imaging device (38) is a lensless imaging device.

7. A method for analyzing an analyte of a sample (16) by means of a light beam (F) **characterized in that** the method comprises:
- regulating the relative position of the analyte of the sample (16) in relation to the light beam (F) by applying a regulation method according to any one of claims 1 to 6, and
- analyzing with a device (32) for analyzing the radiation emitted by the analyte of the sample (16) in response to the illumination by the light beam (F).

8. The analysis method according to claim 7, wherein the method successively comprises:
- attenuating the light beam (F) with an attenuation means (30),
- regulating the relative position of the analyte of the sample (16) in relation to the light beam,
- stopping the attenuation of the light beam (F) and
- analyzing with the analysis device (32).

9. The analysis method according to claim 7 or 8, wherein the method further comprises:
- determining characteristics of the analyte of the sample (16) from the diffraction pattern established by the imaging device (38).

10. A sample holder (18) able to hold a sample comprising at least one analyte, the sample holder (18) being **characterized in that** the sample holder (18) comprises:
- an imaging device (38) able to take a transmission image of the beams scattered by an analyte of the sample for establishing a diffraction pattern, and
- a unit for regulating the relative position of the analyte of a sample in relation to a light beam, the light beam (F) stems from a light source (28) and propagates along an axis of propagation (Z), the unit for regulating being able to modify the relative position of the analyte of the sample according to at least one property of the diffraction pattern, the unit for regulating being further able to carry out the following steps:
- aligning the analyte of the sample (16) on the axis of propagation (Z) of the light beam (F),
- modifying the distance between the light source (28) and the analyte of the sample (16) along the axis of propagation (Z) so that the diffraction pattern resulting from the beams diffracted by the analyte of the sample (16) is at the center of the diffraction pattern,
the sample holder (18) being **characterized in that** the unit for regulating is further adapted to carry out the following steps:
- adjusting the distance between the light source (28) and the analyte of the sample (16) along the axis of propagation (Z) until the analyte of the sample (16) occults the light beam (F), and
- maximizing the radiation emitted by the analyte of the sample (16) in response to the excitation of a light beam from the light source (28).

11. The sample holder (18) according to claim 10, wherein the imaging device (38) is a lensless imaging device.

12. An optical system (10) including:
- a light source (28) able to illuminate an analyte of the sample with a light beam (F),
- the sample holder (18) according to claim 10 or 11.

13. The optical system (10) according to claim 12, wherein the regulation unit comprises
- a means for translating the light source (28) along the direction of propagation (Z) of the light beam (F), and
- a means for displacing the sample holder (18, 42) in the plane perpendicular to the direction of propagation (Z) of the light beam (F).

14. The optical system (10) according to claim 13 further including:
- an assembly (14) including:
- the light source (28), and
- an analysis device (32),
the means for translating the light source (28) being able to displace the assembly (14) along the direction of propagation (Z) of the light beam (F).
